# EUROPÄISCHE PATENTANMELDUNG

(11) **EP 1 862 293 A1**
(43) Veröffentlichungstag der Anmeldung: **05.12.2007**
(21) Anmeldenummer: 06011530.0
(22) Anmeldetag: 02.06.2006
(51) Int. Cl.: B29C 70/34, B60R 21/13, B29C 70/20

(54) **Hohlformteil und Verfahren zu seiner Herstellung**

(71) Anmelder: ISE Innomotive Systems Europe GmbH, 51702 Bergneustadt (DE)
(72) Erfinder: Müller, Hartwig, Dr., 09126 Chemnitz (DE)
(74) Vertreter: Grünecker, Kinkeldey, Stockmair & Schwanhäusser Anwaltssozietät

(57) **Zusammenfassung**

Ein Hohlformteil (16') aus Fasem enthaltenden Kunststoff mit mindestens zwei Hohlkammem (6, 7, 8), zwischen denen ein die Hohlkammem begrenzende Außenwandteile (2, 3) verbindender Steg (15) vorgesehen ist, ist ein einstückiger Pressformteil (1) aus in einer Kunststoffmatrix Endlosfasem enthaltendem Faserverbundkunststoff, wobei im Steg (15) entweder direkt zwischen den Außenwandteilen um die Hohlkammem (6, 7, 8) herum verlaufende Endlosfasem (14a) oder von jedem Außenwandteil (2, 3) in den Steg (15) verlagerte, aneinander verankerte Endlosfasem (14b.) enthalten sind.

## Beschreibung

Die Erfindung betrifft einen Hohlformteil gemäß Oberbegriff des Patentanspruchs 1 oder des Patentanspruchs 2, sowie ein Verfahren gemäß dem Oberbegriff des Patentanspruchs 11 oder des Patentanspruchs 12.

Pressformteile aus Endlosfasern enthaltendem Faserverbundkunststoff gewinnen beispielsweise im Automobilbau zunehmende Bedeutung, weil solche Hohlformteile bei extrem geringem Gewicht hervorragende Festigkeit und Verformungseigenschaften erbringen. Bei der Herstellung werden sogenannte Prepregs in eine Pressform eingelegt, bereichsweise mehrlagig, die dann unter Temperatureinfluss plastifiziert und anschließend in die endgültige Form gepresst werden. Die Prepregs enthalten beispielsweise ein Endlosglasfaser-Gewebe mit Schuss- und Kettfäden und eine Imprägnierung mit thermoplastischem Kunststoff. Solche Pressformteile lassen sich zwar z.B. mit Sicken, Verstärkungen, oder dgl. belastungsorientiert einstückig gestalten, bisher jedoch nicht mit größeren Hohlkammern.

Es sind Überrollschutzkörper für Fahrzeug-Überrollschutzvorrichtungen bekannt, die jeweils aus zwei gefügten, schalenförmigen Pressformteilen aus Faserverbundkunststoff bestehen und somit zumindest eine Hohlkammer enthalten. Diese Hohlformteile sind relativ flach, d.h. ihre Stärke ist wesentlich geringer als die Breite und die Länge. Als Überrollschutzkörper wird der gefügte Hohlformteil bei einem Fahrzeugüberschlag vorwiegend in der X-Richtung des Fahrzeugkörpers (Richtung der Fahrzeuglängsachse) belastet, wobei es auf einen außerordentlich leistungsfähigen Schubverbund zwischen den schalenförmigen Presskörpem ankommt. Um die Schubverbundeigenschaften zu verbessern, werden die schalenförmigen Pressformteile entlang ihrer aneinanderliegenden Ränder und gegebenenfalls auch Innenbereich durch mechanische Verbindungselemente gegeneinander gespannt. Die Schubverbundeigenschaften hängen dann aber u.a. vom Reibungskontakt und Verbund zwischen den schalenförmigen Pressformteilen ab; sind jedoch durch diese Fügetechnik begrenzt. Aus diesen Gründen werden die Pressformteile z.B. belastungsorientiert verstärkt, was sich im Gesamtgewicht niederschlägt.

Ferner ist eine Überrollschutzvorrichtung für einen Cabriolet-Fahrzeugkörper bekannt, die nach Art eines Targa-Bügels bogenförmig über der offenen Seite des Fahrzeugkörpers verläuft. Dieser Bügel ist aus mittels mechanischer Verbindungselemente gefügter Faserverbundkunststoff-Pressformteilen mit allgemein welligem Querschnitt gebildet, so dass über die Länge des Bügels durchlaufende kanalartige Hohlkammem gebildet sind. In die Hohlkammem können Verstärkungselemente eingesetzt sein, die bei der Formung der Pressformkörper als Formkeme dienen können.

Es sind zwar mit Fasern verstärkte Kunststoff-Hohlformteile bekannt, die durch Spritzgießen hergestellt werden. Mit Spritzgießen lassen sich jedoch nur Kunststoffe verarbeiten, die sehr kurze oder nur beschränkt lange Fasern enthalten. Deshalb ist materialbedingt das innere Kraftaufnahmeverhalten solcher Hohlformteile für hohe Anforderungen, z.B. im Automobilbau, nicht geeignet.

Der Erfindung liegt die Aufgabe zugrunde, einen Hohlformteil und ein Verfahren zu seiner Herstellung anzugeben, der einen hochwertigen inneren Schubverbund und dadurch eine verbesserte Kraftaufnahme erbringt, so dass im Außenbereich weniger Verbundkunststoff erforderlich ist und sich insgesamt Gewicht einsparen lässt. Teil der Aufgabe ist es, Verfahren zur Herstellung solcher Hohlformteile anzugeben, die gezielt auf die gegenüber denen des Spritzgießens deutlich unterschiedlichen Möglichkeiten beim Arbeiten mit Endlosfasern enthaltenden Prepregs abgestimmt sind.

Da gemäß Patentanspruch 1 die Außenwandteile direkt über Endlosfasem an den Hohlkammern vorbei verbunden sind, ergibt sich ein außerordentlich hochwertiger innerer Schubverbund bei Belastungen, die in etwa senkrecht auf die Außenwandteile gerichtet sind. Dazu kommt der Vorteil, dass, falls überhaupt, nur wenige mechanische Verbindungselemente erforderlich sind, was den Herstellungsaufwand reduziert. Dank des hochwertigen inneren Schubverbunds und dessen Wegfalls oder der Reduktion mechanischer Verbindungselemente lässt sich bei verbesserten Gebrauchseigenschaften bei gegenüber in etwa gleichwertigen Hohlformteilen eine nennenswerte Gewichtseinsparung erzielen. Beispielsweise lässt sich das Belastungsverhalten eines solchen als Überrollschutzkörper verwendeten Hohlformteils in der X-Belastungsrichtung um bis zu 60 % gegenüber herkömmlichen Hohlformteilen aus Faserverbundkunststoff verbessern.

Gemäß Patentanspruch 2 wird durch die Verzahnung der Formschlusselemente zwischen den Stegteilbereichen ebenfalls ein sehr hochwertiger innerer Schubverbund speziell bei in etwas senkrecht auf die Außenwandteile gerichteten Belastungen erzielt, so dass sich für hohen Anforderungen gerechtwerdende Belastungsfälle Material und damit Gewicht einsparen lässt. Dabei wird bei der Ausbildung der Formschlusselemente die Möglichkeit genutzt, die sich beim Arbeiten mit Prepregs beim Pressen im plastifizierten Zustand gerade noch realisieren lassen, und zwar z.B. im Hinblick auf die Verlagerung von Endlosfasern in die Formschlusselemente hinein.

Mit den Verfahren der Patentansprüche 11 und 12 lassen sich unter Nutzen der Möglichkeiten beim Arbeiten mit Prepregs außerordentlich hoch belastbare, einstückige Hohlformteile mit sehr hochwertigem inneren Schubverbund herstellen, wobei der jeweilige Kern nicht nur die Aufgabe hat, die Hohlkammer auszusparen, sondern auch eine Fließleitfläche zum Verlagern und Positionieren der Endlosfasem bildet, die im späteren Hohlformteil zu einer erheblichen Verbesserung der Kraftaufnahme des Hohlformteils führen.

Um in dem einstückigen Hohlformteil den Schubverbund nicht nur im Steg zwischen den Hohlkammern hochwertiger zu gestalten, ist bei einer zweckmäßigen Ausführungsform auch im jeweiligen Verbindungsbereich zweier Randbereiche durch direkt zwischen den Randbereichen verlaufende Endlosfasern oder durch von jedem Randbereich in den Verbindungsbereich verlagerte, aneinander verankerte Endlosfasern auch in den Randbereichen der Schubverbund verbessert. Ferner werden dann in den Randbereichen kaum noch mechanische Verbindungselemente benötigt.

Bei einer zweckmäßigen Ausführungsform des aus zwei schalenförmigen Pressformteilen gefügten Hohlformteils sind auch in den Randbereichen miteinander verzahnte Formschlusselemente vorgesehen, um den Schubverbund auch in diesen Bereichen zu verbessern.

In einer zweckmäßigen Ausführungsform sind die Formschlusselemente in etwa senkrecht zum Fügebereich ineinandergesteckt. Dabei können, vorzugsweise, die Formschlusselemente Vertiefungen und in die Vertiefungen eingepasste Vorsprünge sein. Die zwischen den Außenwandteilen wirkenden Kräfte werden an vielen einzelnen Stellen und großflächig und in unterschiedlichen Richtungen über den Schubverbund abgetragen.

Bei einer anderen Ausführungsform des aus zwei schalenförmigen Pressformteilen gefügten Hohlformteils sind die Formschlusselemente in etwa parallel zum Fügebereich ineinandergesteckt. In genau dieser Richtung ist zwar der Schubverbund dann weniger hochwertig, hingegen in allen anderen Richtungen, und im Wesentlichen parallel zum Fügebereich, jedoch sehr hochwertig. Da diese Formschlusselemente auch die Außenwandteile zueinander halten, lassen sich mechanische Verbindungselemente weitestgehend einsparen. Zweckmäßig sind schwalbenschwanzartige Vertiefungen und in diese Vertiefungen passende Hakvorsprünge, weil sich diese Gestaltung problemlos beim Arbeiten mit Prepregs und beim Pressen der plastifizierten Prepregs beherrschen lassen. Die Richtung, in der die Formschlusselemente ineinandergesteckt werden, wird im Hinblick auf zu erwartende Belastungsfälle so gewählt, dass der schwächere Schubverbund keinen Nachteil erzeugt.

Zweckmäßig sind im letztgenannten Fall in den Vertiefungen und/oder an den Einhakvorsprüngen Endanschläge zur Begrenzung der Einstecktiefe geformt. Es erfolgt eine exakte Positionierung der beiden Pressformteile relativ zueinander, und lassen sich mechanische Verbindungselemente einsparen. Falls überhaupt die Fügung durch Verbindungselemente unterstützt werden muss, bietet sich Kleben oder bieten sich andere, in dieser Technik üblich mechanische Verbindungselemente an, deren Anzahl dann jedoch gering sein kann.

Zweckmäßig ist jeder Pressformteil aus Endlos-Glasfasergewebe aufweisenden, mit Kunststoff, wie Polypropylen imprägnierten Prepregs hergestellt, die in unterschiedlichsten Spezifikationen handelsüblich sind. Für besonders hochwertige Einsatzfälle ist es jedoch auch denkbar, noch hochwertigeres Endlosfasermaterial zu verwenden, wie Kohlefasern oder Aramid, oder dgl.. Polypropylen als der thermoplastische Kunststoff zum Ausbilden der Kunststoffmatrix, in der die Endlosfasern im fertigen Produkt verankert sind, zeigt besonders günstige Eigenschaften im Hinblick beispielsweise auf die Rückverformung oder dgl..

Der jeweilige Hohlformteil ist zweckmäßig ein Überrollschutzkörper für eine Fahrzeug-Überrollschutzvorrichtung, weil er sich durch einen sehr hochwertigen inneren Schubverbund speziell bei Belastungen in etwa senkrecht auf die Außenwandteile auszeichnet. Allerdings ist die Verwendung solcher Hohlformteile nicht auf dieses Einsatzgebiet beschränkt, sondern es sind auch andere Einsatzfälle denkbar, bei denen es auf eine sehr hohen Anforderungen entsprechende Kraftaufnahme unter Belastungen ankommt.

Die Verfahren sind besonders gut geeignet zum Herstellen von Überrollschutzkörpem aus Faserverbundkunststoff für Automobil-Überrollschutzvorrichtungen, weil sie unter Nutzen der Möglichkeiten beim Arbeiten mit Prepregs zu einem sehr hochwertigen inneren Schubverbund im Steg und gegebenenfalls in den Randbereichen führen.

Anhand der Zeichnungen werden Ausführungsformen des Erfindungsgegenstandes erläutert. Es zeigen:
- Fig. 1: einen Querschnitt eines einstückigen Hohlformteils aus Faserverbundkunststoff, in einer Pressform,
- Fig. 2: einen Querschnitt eines entformten, anderen einstückigen Hohlformteils aus Faserverbundkunststoff,
- Fig. 3: perspektivisch zwei schalenförmige Pressformteile aus Faserverbundkunststoff zur Erstellung eines Formteils,
- Fig. 4 und 5: zwei zueinander gehörende Pressformteile aus Faserverbundkunststoff zur Erstellung eines Hohlformteils,
- Fig. 6 und 7: Ansichten der Pressformteile der Fig. 4 und 5 in Blickrichtung von links in Fig. 4 und 5, und
- Fig. 8: den aus den Pressformteilen erstellten Formhohlteil in der gleichen Blickrichtung wie in den Fig. 6 und 7.

Ein Hohlformteil 1 aus Endlosfasem 14, 14a enthaltendem Faserverbundkunststoff K wird in einer Pressform W hergestellt, die obere und untere, einen Formhohlraum definierende Pressform-Hälften 9, 10 aufweist. Das Verfahren erfolgt unter Anwendung von Druck und Temperatur, wobei der Faserverbundkunststoff K aus in die Pressform W eingelegten Prepregs entsteht, die beispielsweise ein Endlos-Glasfasergewebe aus Schuss- und Kettfäden und eine Kunststoffimprägnierung, z.B. mit thermoplastischem Propylen, aufweisen. Die Prepregs sind gegebenenfalls in mehreren Lagen und mit einem Volumen eingelegt, mit welchem der Formhohlraum nach dem Plastifizieren des Kunststoffes und Verlagern der Endlosfasem vollständig ausgefüllt wird.

Der so einstückig hergestellte Hohlformteil 1 ist ein Pressformteil 16' aus dem Faserverbundkunststoff K und besitzt Außenwandteile 2, 3, die annähernd zueinander parallel und beabstandet sind, die Außenwandteile 2, 3 stoffschlüssig, d.h. über die Endlosfasern, miteinander verbindende Randbereiche 4, 5, und jeweils einen Steg 15 zwischen Hohlkammern 6, 7, 8. Die Hohlkammern 6, 7, 8 werden durch in die Pressform W eingelegte oder einen Teil davon bildenden Kerne 11, 12 und 13 gebildet. Zweckmäßig ist der Hohlformteil 1 an einem Ende offen und am anderen verschlossen.

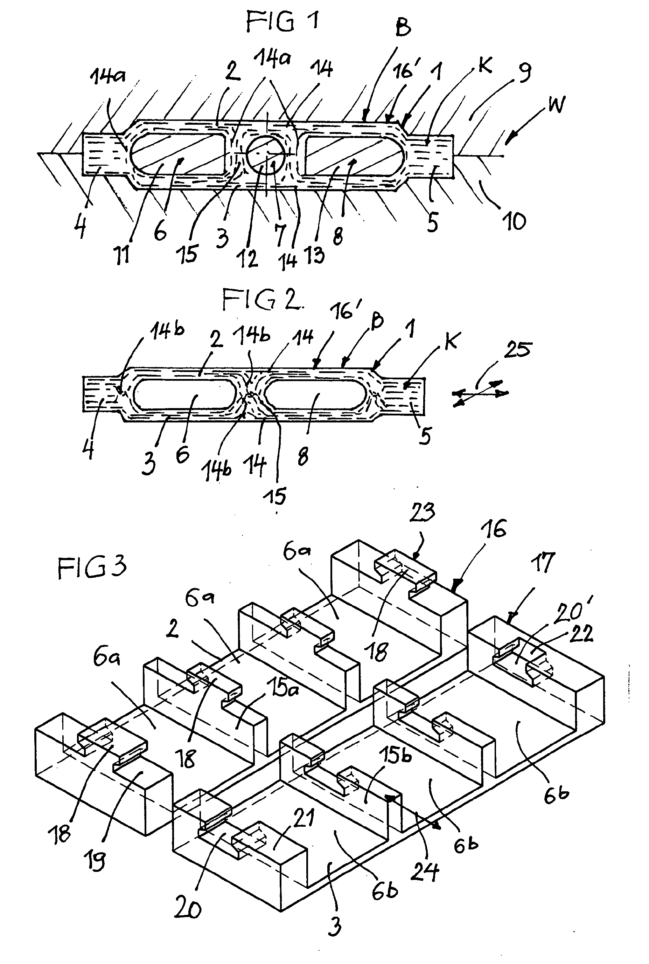

Der in Fig. 1 gezeigte Hohlformteil 1 zeichnet sich dadurch aus, dass zusätzlich oder von den Endlosfasem 14 in den Außenwandteilen 2, 3 Endlosfasern 14a durchgehend um die Hohlkammem 7, 8 herum verlaufen und die Außenwandteile 2, 3 direkt miteinander verbinden. Die um die Hohlkammern 6, 7, 8 verlaufenden Endlosfasern können nur in den Formhohlraum-Abschnitten enthalten sein, die die Stege 15 definieren, oder, wie gezeigt, auch in den Randbereichen 4, 5. Auf diese Weise wird einerseits ein hochwertiger innerer Schubverbund in den Stegen 15 und gegebenenfalls in den Randbereichen 4, 5 erzielt, und werden die Außenwandteile 2, 3 festhaltend miteinander verbunden, so dass gegebenenfalls keine weiteren mechanischen Verbindungselemente benötigt werden. Um die Endlosfasem 14a so in den Steg 15 zu platzieren, wird ein oder werden mehrere Prepregs (die in flächiger, biegsamer Form vorliegen), um jeden Kern 11, 12, 13 herumgelegt, gegebenenfalls so, dass sie Prepregs in den Außenwandteilen 2, 3 und gegebenenfalls einander überlappen.

In Fig. 1 sind insgesamt drei Hohlkammem 6, 7, 8 vorgesehen, wobei die beiden äußeren Hohlkammem 6, 8 einen langgestreckt ovalen Querschnitt haben, während die Hohlkammer 7 einen runden Querschnitt besitzt. Die Querschnitte der Hohlkammem können jedoch beliebig gewählt werden.

Bei der Ausführungsform des einstückigen Hohlformteils 1 aus Faserverbundstoff K in Fig. 2 sind im Pressformteil 16' zwei im Wesentlichen gleiche Querschnitte aufweisende Hohlkammem 6, 8 vorgesehen, zwischen denen nur ein Steg 15 vorliegt. Im Unterschied zur Ausführungsform von Fig. 1 sind hier zusätzlich zu Endlosfasern 14 im Bereich der Außenwandteile 2, 3 Endlosfasern 14b jeweils von der Seite der Außenwandteile 2, 3 her in den Steg 15 hineinverlagert, vorzugsweise so weit, dass sie einander überlappen und in der Kunststoffmatrix in einem belastbaren Verbund sind. Auch in den Randbereichen 4, 5 können solche zum Teil um die Hohlkammern 6, 8 verlagerte Endlosfasem 14b vorgesehen sein. Der innere hochwertige Schubverbund widersteht im besonderen Kräften, die sich in den durch die Doppelpfeile 25 angedeuteten Richtungen zwischen den Außenwandteilen 2, 3 im Steg 15 und gegebenenfalls den Randbereichen 4, 5 entwickeln, wenn der Hohlformteil 1 einer externen Belastung unterworfen wird, beispielsweise in Richtungen annähernd senkrecht zu den Außenwandteilen 2 oder 3.

Die Hohlformteile 1 der Fig. 1 und 2 sind zweckmäßig Überrollschutzkörper für Automobil-Überrollschutzvorrichtungen, die im Automobil entweder stationär oder ausfahrbar montiert werden, wobei die Hohlkammern 6, 7, 8 gegebenenfalls zum Unterbringen funktionsnotwendiger Einrichtungen nutzbar sind.

Fig. 3 verdeutlicht eine Ausführungsform, bei der ein Hohlformteil aus zwei schalenförmigen Pressformteilen 16, 17 aus Faserverbundkunststoff erstellt wird. Die beiden Pressformteile 16, 17 werden speziell gefügt und gegebenenfalls durch Kleben oder nicht gezeigte mechanische Verbindungselemente aneinander fixiert.

An den Außenwandteilen 2, 3 sind Stegteilbereiche 15a bzw. 15b integral angeformt, die zueinander passende Fügeflächen 19, 21 definieren und zueinander passende Formschlusselemente 18, 20 aufweisen. Im Pressformteil 16 sind die Formschlusselemente Einhakvorsprünge mit T-förmigem Querschnitt, die in Längsrichtung aufeinander ausgerichtet sind. Zwischen den Stegteilbereichen 15a sind Hohlkammer-Teilbereiche 6a gebildet. Der in Fig. 3 ganz rechts am Pressformteil 16 gezeigte Vorsprung 18 besitzt eine stirnseitige Anschlagfläche 23.

Der dazu passende andere Pressformteil 17 besitzt ebenfalls integral angeformte Stegteilbereiche 15b, zwischen denen Hohlkammer-Teilbereiche 6b gebildet sind. Die Formschlusselemente 20 des Pressformteils 17 sind schwalbenschwanzartige Vertiefungen, in die beim Fügen der beiden Pressformteile 16, 17 zum Hohlformteil die Vorsprünge 18 einander verzahnend eingeschoben oder eingesteckt werden, bis die Anschlagfläche 23 an einer Anschlagfläche 22 der in Fig. 3 im Pressformteil 17 ganz rechts gezeigten Vertiefung (Formschlusselement 20') anliegt. Die Pressformteile 16, 17 sind einstückig aus Faserverbundkunststoff hergestellt, wobei in der Figur nicht gezeigte Endlosfasem in den Stegteilbereichen 15a, 15b, in den Formschlusselementen 18, 20 und in den Außenwandteilen 2, 3 enthalten sind.

Der aus den Pressformteilen 16, 17 erstellbare Hohlformteil leistet einen hochwertigen Schubverbund hauptsächlich in Richtung des Doppelpfeiles 24.

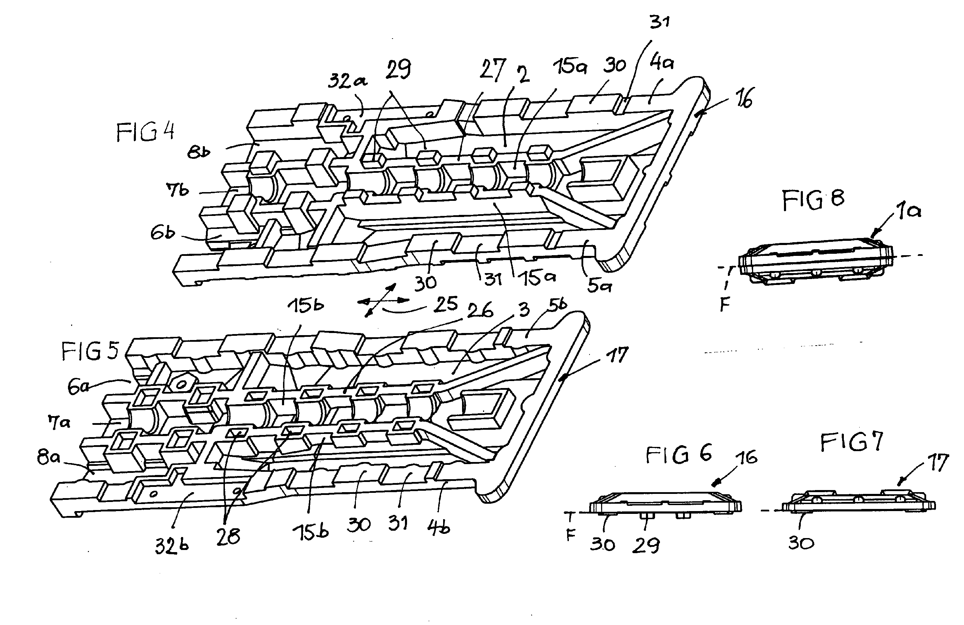

In den Fig. 4 und 5 sind zwei zueinanderpassende einstückige Pressformteile 16, 17 aus Faserverbundkunststoff gezeigt, aus denen sich ein Hohlformteil 1a gemäß Fig. 8 erstellen lässt, der in einem im Wesentlichen flächigen Fügebereich F gefügt ist.

Der Pressformteil 16 weist angrenzend an den Außenwandteil 2 Stegteilbereiche 15a und erhabene Randbereiche 4a, 5a auf, zwischen denen Hohlkammer-Teilbereiche 6b, 7b, 8b gebildet sind, in etwa analog zu Fig. 1. An den Stegteilbereichen 15a, die integral mit dem Außenwandteil 2 geformt sind, sind integral Formschlusselemente 29 in Form blockförmiger vortretender Vorsprünge angeformt, und zwar in Zwischenabständen verteilt über die Länge der Stegteilbereiche 15a. Auch in den Randbereichen 4a, 5a sind zweckmäßig Formschlusselemente 30, 31 in Form blockförmiger Vorsprünge und blockförmiger Vertiefungen integral geformt, wobei Endlosfasern in dem Faserverbundkunststoff auch in die Formschlusselemente 29, 30, 31 verlagert sind. Zusätzlich ist randseitig eine Aussparung 32a eingeformt, die beispielsweise zum späteren Montieren einer Rastschiene dienen kann.

Der dazu passende andere Pressformteil 17 weist als Formschlusselemente 28 zu den Vorsprüngen passende Vertiefungen in den Stegteilbereichen 15b des Außenwandteils 3 eingeformt sind. Ferner sind in den Randbereichen 5b, 4b Formschlusselemente 30, 31 in Form von blockartigen Vorsprüngen und blockartigen Vertiefungen geformt.

Die Fig. 6 und 7 zeigen die beiden Pressformteile 16, 17 jeweils in einer Ansicht in der Richtung des Fügebereichs F und von der in Fig. 4 bzw. 5 rechts liegenden Stirnseite, wobei Formschlusselemente 29 und/oder 30 über den Fügebereich F vorspringen.

Die beiden Pressformteile 16, 17 werden nach der Herstellung in unterschiedlichen Pressformen so im Fügebereich zum fertigen Hohlformteil 1a gefügt, wie dies in Fig. 8 angedeutet ist. Der Hohlformteil 1a kann ein Überrollschutzkörper für eine Automobil-Überrollschutzvorrichtung sein, der an der gezeigten Stirnseite und entlang der Randbereiche geschlossen, hingegen am in Fig. 8 in der Zeichnungsebene liegende Ende zu den durch die Hohlkammer-Teilbereiche 6a, 6b, 7a, 7b, 8a, 8b gebildeten Hohlkammem offen ist. Auch der Pressformteil 17 weist randseitig eine Vertiefung 32b für die Rastschiene auf. In dem Hohlformteil 1a werden zweckmäßig mechanische Verbindungselemente montiert, z. B. Spannschrauben oder Nieten z.B. in den Randbereichen, oder es werden die beiden Pressformteile 16, 17 durch Kleben miteinander stoffschlüssig verbunden. Im Hohlformteil 1a wird ein hochwertiger innerer Schubverbund zum Abtragen von Kräften beispielsweise in verschiedenen durch die Doppelpfeile 25 angedeuteten Richtungen erzielt.

## Patentansprüche

1. Hohlformteil (1) aus Fasern enthaltendem Kunststoff, mit mindestens zwei Hohlkammern (6, 7, 8), zwischen denen ein die Hohlkammem begrenzende Außenwandteile (2, 3) verbindender Steg (15) vorgesehen ist, **dadurch gekennzeichnet, dass** der Hohlformteil (1) ein einstückiger Pressformteil aus in einer Kunststoffmatrix Endlosfasern (14, 14a, 14b) enthaltendem Faserverbundkunststoff (K) ist, und dass der Steg (15) in der Kunststoffmatrix entweder direkt zwischen den Außenwandteilen (2, 3) um die Hohlwand (6, 7, 8) herum verlaufende Endlosfasem (14a) oder von jedem Außenwandteil (2, 3) in den Steg (15) verlagerte, in der Kunststoffmatrix aneinander verankerte Endlosfasem (14b) enthält.

2. Hohlformteil (1a) aus Fasern enthaltendem Kunststoff, mit mindestens zwei Hohlkammern (6, 7, 8), zwischen denen ein die Hohlkammem begrenzende Außenwandteile (2, 3) verbindender Steg (15) vorgesehen ist, **dadurch gekennzeichnet, dass** der Hohlformteil (1a) zwei in einem zumindest weitgehenden flächigen Fügebereich (F) gefügte, jeweils einstückige und schalenförmige Pressformteile (16, 17) aus in einer Kunststoffmatrix Endlosfasem enthaltendem Faserverbundkunststoff (K) mit integrierten Stegteilbereichen (15, 15b) aufweist, die Endlosfasem enthalten, dass die Stegteilbereiche (15a, 15b) mit an diesen integral geformten Formschlusselementen (28, 29, 18, 20) in zumindest einer Richtung etwa parallel zum Fügebereich (F) verzahnend ineinandergreifen, und dass in den Formschlusselementen in der Kunststoffmatrix aus den Stegteilbereichen in die Formschlusselemente verlagerte Endlosfasern enthalten sind.

3. Hohlformteil nach Anspruch 1, **dadurch gekennzeichnet, dass** die Hohlkammem (6, 7, 8) an ihren dem Steg (15) abgewandten Außenseiten durch miteinander verbundene flanschartig abgesetzte Randbereiche (4, 5) der Außenwandteile (2, 3) begrenzt sind, und dass im jeweiligen Verbindungsbereich zweier Randbereiche in der Kunststoffmatrix entweder direkt zwischen den Randbereichen um die Hohlkammem verlaufende Endlosfasem (14a) oder von jedem Randbereich in den Verbindungsbereich verlagerte, in der Kunststoffmatrix aneinander verankerte Endlosfasern (14b) enthalten sind.

4. Hohlformteil nach Anspruch 2, **dadurch gekennzeichnet, dass** die zwei schalenförmigen Pressformteile (16, 17) gefügte Randbereiche (4a, 4b, 5a, 5b) aufweisen, die die Hohlkammem dem Steg (15) abgewandt begrenzen, und dass auch die Randbereiche mit integral geformten, Endlosfasern enthaltenden Formschlusselementen (30, 31) versehen sind, die in zumindest einer Richtung im Wesentlichen parallel zum Fügebereich (F) einander verzahnend ineinandergreifen.

5. Hohlformteil nach Anspruch 2, **dadurch gekennzeichnet, dass** die Formschlusselemente (29, 28; 30, 31) in etwa senkrecht zum Fügebereich (F) ineinandergesteckt sind, und, vorzugsweise, als Vertiefungen und in die Vertiefungen eingepasste Vorsprünge ausgebildet sind.

6. Hohlformteil nach Anspruch 2, **dadurch gekennzeichnet, dass** die Formschlusselemente (18, 20) in etwa parallel zum Fügebereich (F) ineinandergesteckt und, vorzugsweise, als schwalbenschwanzartige Vertiefungen und in die Vertiefungen passende Einhakvorsprünge ausgebildet sind.

7. Hohlformteil nach Anspruch 6, **dadurch gekennzeichnet, dass** in den Vertiefungen und/oder an den Einhakvorsprüngen Endanschläge (22) zur Begrenzung der relativen Einstecktiefe geformt sind.

8. Hohlformteil nach Anspruch 2, **dadurch gekennzeichnet, dass** die zwei Pressformteile (16, 17) zusätzlich durch Kleben oder durch mechanische Verbindungselemente miteinander verbunden sind.

9. Hohlformteil nach Anspruch 1 oder 2, **dadurch gekennzeichnet, dass** der Pressformteil (1, 16, 17) aus Glasfasergewebe aufweisenden, mit Kunststoff, wie Polypropylen, imprägnierten Prepregs in einer mehrteiligen Pressform (W) hergestellt ist.

10. Hohlformteil nach wenigstens einem der vorhergehenden Ansprüche, **dadurch gekennzeichnet, dass** der Hohlformteil (1, 1a) ein Überrollschutzkörper (B) für eine Fahrzeug-Überrollschutzvorrichtung ist.

11. Verfahren zum Herstellen von Pressformteilen (16') aus Endlosfasern (14, 14a) enthaltendem Faserverbundkunststoff (K) in einer mehrteiligen Pressform (W) unter Einfluss von Druck und Temperatur, bei dem mit Kunststoff imprägnierte Prepregs in der Pressform verlegt und anschließend in plastifiziertem Zustand gepresst werden, **dadurch gekennzeichnet, dass** zum Formen eines einstückigen Hohlformteils (1) mit zumindest einer Hohlkammer (6, 7, 8) in die Pressform (W) wenigstens ein Kern (11, 12, 13) so eingebracht wird, dass zwischen der Pressform (W) und dem Kern in etwa in Pressform-Schließrichtung verlaufende Formhohlraum-Abschnitte frei bleiben, und dass Prepregs mit Endlosfasern (14a) auch an dem Kern vorbei oder um den Kern herum und durch zumindest einen Formhohlraumabschnitt hindurch verlegt werden, die nach dem Pressen die Außenwandbereiche (2, 3) des Hohlformteils (1) im Steg (15) direkt miteinander verbinden.

12. Verfahren zum Herstellen von Pressformteilen (16') und Endlosfasern (14, 14b) enthaltendem Faserverbundkunststoff (K) in einer mehrteiligen Pressform (W) unter Einfluss von Druck und Temperatur, bei dem mit Kunststoff imprägnierte Prepregs in der Pressform (W) verlegt und anschließend in plastifiziertem Zustand verpresst werden, **dadurch gekennzeichnet, dass** zum Formen eines einstückigen Hohlformteils (1) mit wenigstens einer Hohlkammer (6, 7, 8) in die Pressform (W) wenigstens ein Kern (11, 12, 13) so eingebracht wird, dass zwischen der Pressform (W) und dem Kern in etwa in Pressform-Schließrichtung verlaufende Formhohlraum-Abschnitte frei bleiben, und dass Prepregs mit Endlosfasern (14, 14b) bei den Formhohlraum-Abschnitten so von zwei Seiten an den Kern gelegt und beim Pressen zumindest teilweise in die Formhohlraum-Abschnitte verlagert und die Außenwandbereiche (2, 3) über in den Formhohlraum-Abschnitten aneinander verankerte Endlosfasem (14b) im Steg (15) miteinander verbunden werden.

13. Verfahren nach Anspruch 11 oder 12, **dadurch gekennzeichnet, dass** als der Hohlformteil (1) ein Überrollschutzkörper (B) für eine Fahrzeug-Überrollschutzvorrichtung hergestellt wird.
